# EUROPÄISCHE PATENTSCHRIFT

(11) **EP 1 532 043 B1**
(45) Veröffentlichungstag und Bekanntmachung des Hinweises auf die Patenterteilung: **08.04.2009**
(21) Anmeldenummer: 03790840.7
(22) Anmeldetag: 31.07.2003
(51) Int. Cl.: B62K 25/16

(54) **VERSCHIEBELAGER UND MOTORRADGABEL MIT EINEM SOLCHEN VERSCHIEBELAGER**
SLIDING BEARING AND MOTORCYCLE FORK COMPRISING SUCH A SLIDING BEARING
PALIER COULISSANT ET FOURCHE DE MOTO EQUIPEE D'UN TEL PALIER COULISSANT

(30) Priorität: 29.08.2002 DE 10239618
(43) Veröffentlichungstag der Anmeldung: 25.05.2005
(73) Patentinhaber: Bayerische Motoren Werke Aktiengesellschaft, 80809 München (DE)
(72) Erfinder: VILSMEIER, Gerd, 80634 München (DE)
(86) Internationale Anmeldenummer: PCT/EP2003/008459
(87) Internationale Veröffentlichungsnummer: WO 2004/020273

(56) Entgegenhaltungen:
- WO-A-01/29438
- DE-A- 3 936 567
- DE-A- 19 957 964
- DE-C- 73 216
- DE-U- 9 406 223
- GB-A- 845 675
- US-A- 4 884 989

## Beschreibung

Die vorliegende Erfindung betrifft eine Motorradgabel mit einem Verschiebelager.

Die vorliegende Erfindung betrifft eine Motorradgabel mit einem Verschiebelager gemäß den Merkmalen des Patentanspruches 1.

Verschiebelager sind seit langem aus dem Stand der Technik bekannt. Verschiebelager, ähnlich, wie sie im Zusammenhang mit der Motorradgabel des Patentanspruches 1 verwendet werden, sind aus der GB 845 675 bekannt. Zum technischen Hintergrund der Erfindung zählt ferner die US 4 884 898.

Aus der DE 199 57 964 A1 ist eine Vorderradführung für ein Motorrad bekannt. Das Motorrad weist eine Motorradgabel mit zwei Gabelrohren auf. Die Gabelrohre bestehen jeweils aus einem unteren Teil, das als "Radträgerrohr" bezeichnet werden kann und an dem das Vorderrad befestigt ist. Das Radträgerrohr bildet ein Außenteil eines Verschiebelagers. In das Radträgerrohr ist ein bananenartig gekrümmtes Innenteil eingeschoben, das den unteren Abschnitt eines oberen Gabelrohrelementes bildet. Das bananenförmig gekrümmte Endstück des oberen Gabelrohres weist an seiner Vorderseite und an seiner Hinterseite jeweils eine Führungsfläche auf. Im Radträgerrohr sind Wälzlager angeordnet, die auf den Führungsflächen abrollbar sind. Das bananenförmig gekrümmte Endstück kann relativ zum Radträger verschoben werden, wobei die Wälzlager bzw. Wälzkörper auf den Führungen abrollen. Einzelheiten hinsichtlich der konkreten konstruktiven Gestaltung der Führungsflächen und der Wälzlager bzw. Wälzkörper sind der DE 199 57 964 A1 nicht zu entnehmen.

Aufgabe der Erfindung ist es, eine Motorradgabel mit verbesserten Schiebelagern zu schaffen, die dauerhaft spielfrei sind.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Die Erfindung geht von einer Motorradgabel mit zwei Radträger- bzw. Gabelrohren aus, in denen jeweils ein Verschiebelager angeordnet ist, wobei die Verschiebelager jeweils ein Innenteil und einem Außenteil aufweisen. Das Innenteil weist an seiner Außenseite Laufbahnen auf, die sich in Verschieberichtung erstrecken. Das Außenteil umgreift das Innenteil und ist relativ zum Innenteil verschieblich. Im Inneren des Außenteils sind mindestens zwei Wälzkörper angeordnet. Die Wälzkörper sind jeweils um eine im Inneren des Außenteils angeordnete Drehachse drehbar gelagert. Bei einer Verschiebung des Innenteils relativ zum dem Außenteil rollen die Wälzkörper auf den Laufbahnen des Innenteils ab.

Das Grundprinzip der Erfindung besteht nun darin, Wälzkörper zu verwenden, die eine konvexe Form haben und die Laufbahnen, auf denen die Wälzkörper abrollen, konkav zu gestalten. Durch die konvexe Form der Wälzkörper und die konkave Form der Laufbahnen kann das Verschiebelager sowohl senkrecht zur Laufbahn wirkende Druckkräfte als auch quer zur Laufbahn wirkende Seitenkräfte aufnehmen. Die Wälzkörper und schmiegen sich eng an die Laufbahnen an, was eine gute Kraftverteilung sicherstellt und eine Materialabplattung verhindert.

Nach einer Weiterbildung der Erfindung überdecken die Drehachsen der Wälzkörper - vergleichbar mit einer Kreisbogensehne - ein bogenartiges Wandsegment des Außenteils. Die Enden der Drehachsen sind jeweils an der Innenseite des Außenteils befestigt bzw. gelagert.

Die Wälzkörper können beispielsweise kugelförmig oder ellipsoidförmig oder ganz allgemein gesprochen ballig ausgeführt sein. Vorzugsweise sind die Wälzkörper seitlich abgeflacht. Im Falle kugelförmiger Wälzkörper handelt es sich dann um "abgeflachte" Kugeln, d.h. um kugelförmige Körper, bei denen seitlich Kugelkalotten "fehlen".

Vorzugsweise ist das Außenteil ein geschlossenes, zum Beispiel kreiszylindrisches Rohr bzw. ein kreiszylindrischer ringförmiger Lagerkäfig. Vorzugsweise weist das Außenteil über seinen Umfang Wandungsabschnitte auf, die sich in ihrer Wandstärke unterscheiden. Mit einer über den Außenumfang variierenden Wandstärke kann ganz gezielt die Steifigkeit des Außenteils konstruktiv vorgegeben werden. Ein ganz entscheidendes Qualitätskriterium bei Verschiebelagern ist die Spielfreiheit. Spielfreiheit soll möglichst über die gesamte Lebensdauer des Lagers gewährleistet sein. Spielfreiheit kann dadurch erreicht werden, dass die Wälzkörper gegenüber den Laufbahnen bzw.'dem Innenteil "vorgespannt" sind. Die Wälzkörper sind im Außenteil gelagert und selbst nahezu unelastisch. Deshalb muss das Außenteil zumindest im Bereich der Wälzkörper eine gewisse radiale Elastizität aufweisen. Die erforderliche Elastizität kann durch geeignete Dimensionierung der Wandstärken des Außenteils in den einzelnen Umfangsbereichen erreicht werden. Vorzugsweise ist die Wandstärke des Außenteils in den von den Drehachsen und den Wälzkörpern überdeckten Wandabschnitten geringer als in den übrigen Wandabschnitten. Das Außenteil kann sich somit im Bereich der Wälzkörper in gewissem Umfang radial dehnen.

Das Außenteil ist vorzugsweise ein kreiszylindrischer Lagerring. Bei einer Motorradgabel wird dieser Lagerring beispielsweise durch Einpressen im Radträgerrohr fixiert. Durch das Einpressen entstehen radial von außen auf den Lagerring einwirkende Kräfte. Dennoch sollte, wie oben dargelegt, das Außenteil, das heißt der "Lagerring" zumindest im Bereich der Wälzkörper eine gewisse radiale Elastizität aufweisen. Vorzugsweise ist deshalb an der Außenseite des Außenteils in den von den Drehachsen und den Wälzkörpern überdeckten Wandabschnitten des Außenteils jeweils eine Aussparung vorgesehen. Im Bereich der von den Wälzkörpern und den Drehachsen überdeckten Wandabschnitten des Außenteils besteht also zwischen dem Außenumfang des Außenteils und einem das Außenteil umgebenden Bauelement, wie zum Beispiel einem Radrohrträger, in dem das Außenteil eingepresst ist, ein gewisser radialer Zwischenraum. Dieser Zwischenraum ermöglicht eine gewisse radiale Aufweitung des Außenteils.

Zusätzlich kann vorgesehen sein, dass die Wand des Außenteils im Mittelbereich der Drehachsen jeweils eine Durchgangsöffnung aufweist. Mit einer derartigen Durchgangsöffnung kann gezielt eine Materialschwächung der Wandung des Außenteils und somit die erforderliche Elastizität erreicht werden. Zudem hat eine Durchgangsöffnung den Vorteil, dass die Wälzkörper näher zum Außenumfang des Außenteils hin gerückt sein können. Ein Teil der Wälzkörper kann sogar in die Durchgangsöffnung, das heißt in den Wandbereich des Außenteils ragen, was eine sehr kompakte Bauweise ermöglicht.

Die Wälzkörper können auf den Drehachsen gleit- oder wälzgelagert sein. Das Verschiebelager kann zwei oder mehr Wälzkörper aufweisen. Wenn zwei Wälzkörper vorgesehen sind, können diese diametral gegenüberliegend im Außenteil angeordnet sein.

Zusätzlich kann vorgesehen sein, dass die Wälzkörper an ihrem Außenumfang im Mittelbereich der jeweiligen Drehachse ein "Mitnahmeelement" aufweisen. Das Mitnahmeelement kann beispielsweise ein elastischer Kunststoffring oder eine Verzahnung sein. Es stellt sicher, dass bei einer Relativverschiebung des Innenteils gegenüber dem Außenteil die Wälzkörper tatsächlich auf den Laufbahnen abrollen. Gleitreibung kann somit vermieden werden.

Im folgenden wir die Erfindung anhand eines Ausführungsbeispiels im Zusammenhang mit der Zeichnung näher erläutert. Es zeigen:
- Figur 1: ein Verschiebelager gemäß dem Stand der Technik, wie es aus der DE 199 57 964 A1 bekannt ist;
- Figur 2: ein Verschiebelager gemäß der Erfindung in dreidimensionaler Darstellung;
- Figur 3: das Schiebelager der Figur 2 in Stirnansicht in eingebautem Zustand; und
- Figur 4: das Außenteil des Verschiebelagers in perspektivischer Darstellung.

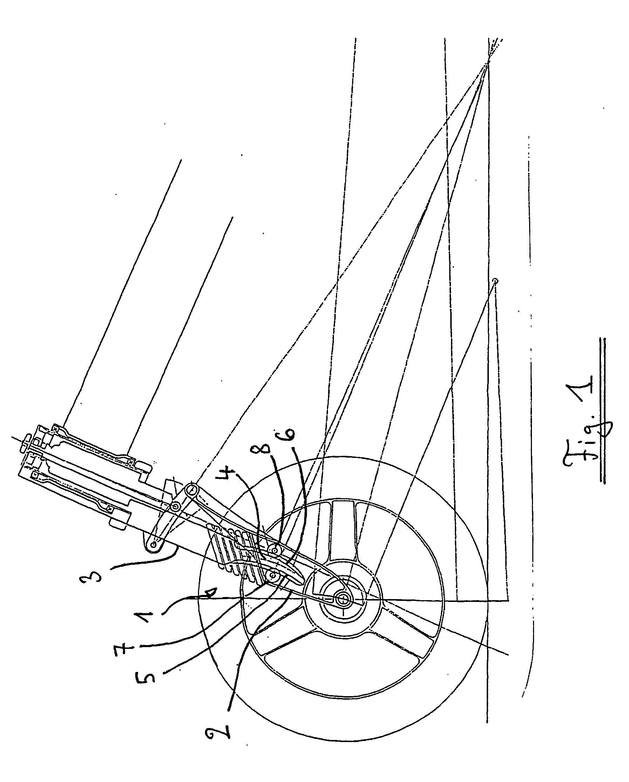

Figur 1 zeigt eine Vorderradaufhängung eines Motorrads mit einem Verschiebelager 1 gemäß dem Stand der Technik. Die Vorderradaufhängung ist durch zwei Gabelrohre gebildet, von denen hier nur ein Gabelrohr zu sehen ist. Jedes der beiden Gabelrohre besteht aus einem unteren Teil 2, das im folgenden als "Radträgerrohr" bzw. als "Außenteil" bezeichnet wird und einem oberen Teil 3, an dessen unterem Ende ein im folgenden als Innenteil 4 bezeichnetes bananenförmig gekrümmtes Element vorgesehen ist. Das Innenteil 4 weist eine vordere und eine hintere Laufbahn 5, 6 auf. Drehbar gelagert im Außenteil 2 sind Wälzkörper 7, 8, die auf den zugeordneten Laufbahnen abrollen, wenn das Außenteil 2 relativ zum Innenteil 4 verschoben wird.

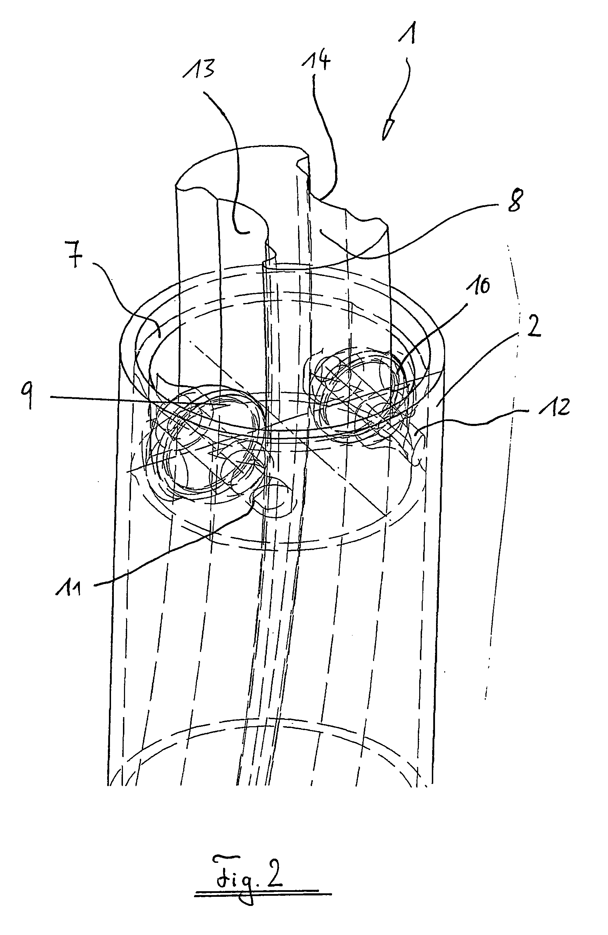

Figur 2 zeigt ein Verschiebelager 1 gemäß der Erfindung. Das Verschiebelager 1 weist ein in einem Radträgerrohr 2 angeordnetes Außenteil 7 und ein relativ dazu verschiebliches Innenteil 8 auf. Das Außenteil 7 ist im wesentlichen durch einen kreiszylindrischen Ring gebildet, der in das Radträgerrohr eingepresst ist. Dieser Ring kann auch als "Lagerkäfig" bezeichnet werden. Das Außenteil 7 kann in Axialrichtung im Radträgerrohr durch einen Absatz (nicht dargestellt) und auf der anderen Seite beispielsweise durch einen Sicherungsring (nicht dargestellt) axial festgelegt sein.

Im Inneren des Außenteils 7 sind zwei Wälzkörper 9, 10 angeordnet. Die Wälzkörper 9, 10 sind drehbar, zum Beispiel durch Gleitlager oder Wälzlager auf zugeordneten Drehachsen 11, 12 gelagert. Die Wälzkörper können beispielsweise kugelförmig oder ellipsoidförmig sein oder eine sonstige ballige bzw. konvexe Form haben. Bei dem in den Fig. 2-4 gezeigten Ausführungsbeispiel sind die Wälzkörper kugelförmig mit "abgeschnittenen Seiten". Die Wälzkörper rollen bei einer Relativverschiebung des Außenteils 7 gegenüber den Innenteil 8 auf entsprechend konkav gestalteten Laufbahnen 13, 14, ab die sich in Verschieberichtung an der Außenseite des Innenteils 8 erstrecken. Aufgrund der konvexen Form der Wälzkörper 9, 10 und der konkaven Form der Laufbahn 13, 14 schmiegen sich die Wälzpartner gut aneinander an, was eine hohe Standfestigkeit sicherstellt. Ein weiterer hieraus resultierender Vorteil besteht darin, dass das Verschiebelager 1 sowohl senkrecht als auch quer zu den Laufbahnen 13, 14 wirkende Kräfte aufnehmen kann.

Die Krümmungsradien der Wälzkörper 9, 10 und der Laufbahnen 13, 14 müssen nicht unbedingt exakt gleich sein. Vielmehr kann der Krümmungsradius der Laufbahnen 13, 14 etwas größer sein als der Krümmungsradius der Wälzkörper 9, 10. Dadurch wird eine definierte Anlage der Wälzkörper 9, 10 an den Laufbahnen 13, 14 sichergestellt.

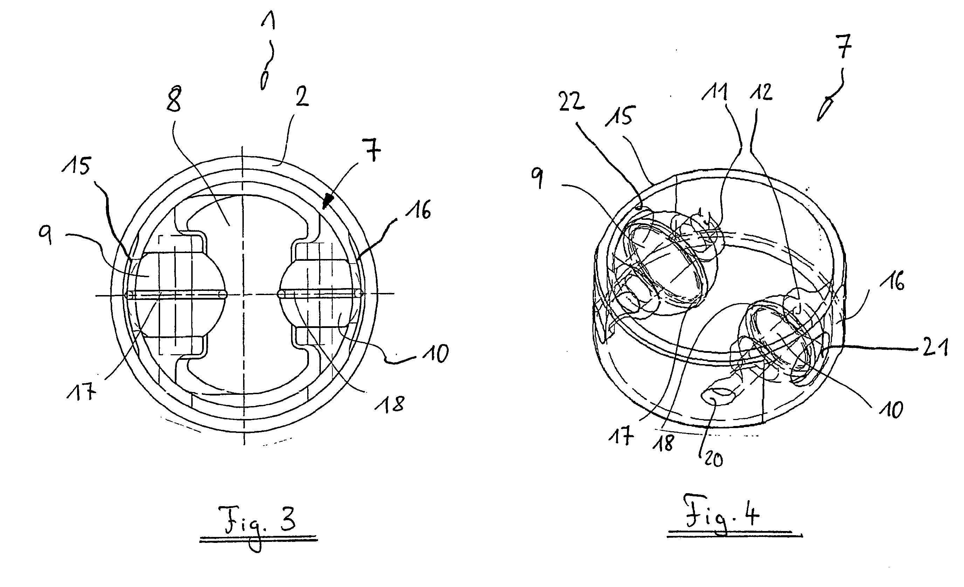

Figur 3 zeigt das Verschiebelager 1 in seiner Stirnansicht. Aus Figur 3 ist ersichtlich, dass das kreisringförmige Außenteil 7 in ein Radträgerrohr 2 eingepresst ist. Das Außenteil 7 weist über seinen Umfang eine "ungleichmäßige" Wandstärke auf. Im Bereich der Drehachsen bzw. der Wälzkörper 9, 10 ist die Wandstärke des Außenteils 7 geringer als in den übrigen Bereichen. Im Bereich der Wälzkörper 9, 10 ist nämlich am Außenteil 7 oder genauer gesagt am Außenumfang des Außenteils 7, jeweils eine Aussparung 15, 16 vorgesehen. Durch diese Aussparungen 15, 16 wird eine gezielte Materialschwächung des Außenteils 7 im Bereich der Wälzkörper 9, 10 erreicht. Um Spielfreiheit sicherzustellen sind die Wälzkörper gegenüber dem Innenteil bzw. den Laufbahnen des Innenteils 8 radial vorgespannt, d.h. das Innenteil 8 weist ein gewisses Übermaß auf. Zum "Ausgleich" dieses Übermaßes ist das Außenteil 7 im eingebauten Zustand im Bereich der Aussparungen 15, 16 radial etwas aufgeweitet und bleibt somit dauerhaft elastisch.

Aus Figur 3 ist ferner ersichtlich, dass die Wälzkörper 9, 10 in ihrem Mittelbereich jeweils ein "Mitnahmeelement" 17, 18 aufweisen. Die Mitnahmeelemente können beispielsweise elastische Kunststoffringe sein. Alternativ dazu können die Mitnahmeelemente auch durch eine Verzahnung gebildet sein, die mit einer entsprechend gestalteten Gegenverzahnung im Innenteil 8 kämmt. Die Mitnahmeelemente stellen ganz allgemein sicher, dass bei einer Relativverschiebung des Außenteils 7 gegenüber dem Innenteil 8 die Wälzkörper 9, 10 auf den Laufflächen des Innenteils 8 abrollen und nicht gleiten.

Zusätzlich können in den Aussparungen 15, 16 "Abstützrippen" vorgesehen sein. Die Abstützrippen können beispielsweise außen am Außenteil 7 angebracht sein. Alternativ dazu können sie auch an der Innenseite des Radträgerrohrs 2 angeordnet sein. Mit solchen Abstützrippen ist eine "Feineinstellung" der radialen Elastizität des Außenteils möglich.

Figur 4 zeigt das Außenteil 7 im perspektivischer Darstellung. Gut zusehen ist hier, dass das Außenteil 7 als ringförmiger Lagerkäfig ausgebildet ist, der Bohrungen 20 aufweist, in den die Drehachsen 11, 12 eingepresst sind, auf welchen die Wälzkörper 9, 10 drehbar gelagert sind. In der Wandung des Lagerkäfigs ist im Bereich der Aussparungen 15, 16 jeweils eine Durchgangsöffnung 21, 22 vorgesehen. Durch die Durchgangsöffnungen wird die Steifigkeit des Außenteils 7 bzw. des Lagerkäfigs gezielt geschwächt. Zusätzlich ergibt sich der Vorteil, dass die Wälzkörper 9, 10 noch weiter zur Wand des Lagerkäfigs hin angeordnet sein können bzw. die Wälzkörper 9, 10 können sogar in den Bereich der Wandung des Lagerkäfigs 19 hineinragen, was eine sehr kompakte Bauweise ermöglicht.

## Patentansprüche

1. Motorradgabel mit zwei Radträger- bzw. Gabelrohren, in denen jeweils ein Verschiebelager angeordnet ist, mit jeweils
• einem Innenteil (8), das an seiner Außenseite sich in Verschieberichtung erstreckende Laufbahnen (13, 14) aufweist,
• einem Außenteil (7), welches das Innenteil (8) umgreift und relativ zum Innenteil (8) verschieblich ist, wobei das Außenteil (7) im wesentlichen kreiszylindrisch ist und in das zugeordnete Radträger- bzw. Gabelrohr eingesetzt ist,
• mindestens zwei Wälzkörpern (9, 10), die im Innern des Außenteils (7) angeordnet sind und die jeweils um eine zugeordnete im Innern des Außenteils (7) angeordnete Drehachse (11, 12) an dem Außenteil (7) drehbar gelagert sind, wobei die Wälzkörper (9, 10) bei einer Verschiebung des Innenteils (8) im Außenteil (7) auf den Laufbahnen (13, 14) abrollen, und die Wälzkörper (9, 10) eine konvexe Form und die Laufbahnen (13, 14) jeweils eine konkave Form haben, zur Übertragung von senkrecht und/oder quer zu den Laufbahnen wirkenden Kräften.

2. Motorradgabel nach Anspruch 1, wobei die Drehachsen (11, 12) jeweils sehnenartig ein bogenartiges Wandsegment der Außenteile (7) überdecken, wobei die Enden der Drehachsen jeweils an der Innenseite der Außenteile (7) gehalten sind.

3. Motorradgabel nach Anspruch 1 oder 2, wobei die Außenteile (7) Wandungsabschnitte unterschiedlicher Stärke aufweisen.

4. Motorradgabel nach einem der Ansprüche 1 bis 3, wobei die Wandstärke der Außenteile (7) in den von den Drehachsen (11, 12) und den Wälzkörpern (9, 10) überdeckten Wandabschnitten geringer ist als in den übrigen Wandabschnitten.

5. Motorradgabel nach Anspruch 4, wobei die geringere Wandstärke in den von den Drehachsen (11, 12) und den Wälzkörpern (9, 10) überdeckten Wandabschnitten durch eine Aussparung (15, 16) realisiert ist, die am Außenumfang des Außenteils (7) vorgesehen ist.

6. Motorradgabel nach einem der Ansprüche 1 bis 5, wobei die Wand des Außenteils (7) im Mittelbereich der Drehachsen (11, 12) jeweils eine Durchgangsöffnung (21, 22) aufweist, in die, in einer Stirnansicht des Außenteils (7) gesehen, der zugeordnete Wälzkörper (9, 10) ragt.

7. Motorradgabel nach einem der Ansprüche 1 bis 6, wobei die Wälzkörper (9, 10) auf den Drehachsen (11, 12) gleitgelagert sind.

8. Motorradgabel nach einem der Ansprüche 1 bis 6, wobei Wälzkörper (9, 10) auf den Drehachsen (11, 12) wälzgelagert sind.

9. Motorradgabel nach einem der Ansprüche 1 bis 8, wobei genau zwei Wälzkörper (9, 10) vorgesehen sind, die diametral gegenüberliegend im Außenteil (7) angeordnet sind.

10. Motorradgabel nach einem der Ansprüche 1 bis 9, wobei die Wälzkörper (9, 10) an ihrem Außenumfang im Mittelbereich der jeweiligen Drehachse (11, 12) ein Mitnahmeelement (17, 18) aufweisen, das bei einer Relativverschiebung des Innenteils (8) gegenüber dem Außenteil (7) ein Abrollen der Wälzkörper (9) auf den Laufbahnen (13, 14) sicherstellt.

11. Motorradgabel nach Anspruch 10, wobei das Mitnahmeelement (17, 18) ein elastischer Ring ist.

12. Motorradgabel nach Anspruch 10, wobei das Mitnahmeelement (17, 18) durch eine Verzahnung gebildet ist, die mit einer zugeordneten Gegenverzahnung des Innenteils (8) kämmt.

13. Motorradgabel nach einem der Ansprüche 1 bis 12, wobei die beiden Gabelrohre jeweils ein Radträgerrohrstück (2) aufweisen, an denen ein Vorderrad befestigt ist, und ein in den Radträgerrohrstücken (2) verschiebliches oberes Gabelrohrstück, wobei die Außenteile (7) in die Radträgerrohrstücke (2) eingepresst und die Innenteile durch die unteren Enden der oberen Gabelrohrstücke gebildet sind.

## Claims

1. A motorcycle fork comprising two wheel-bearing or fork tubes, each containing a sliding bearing, comprising
• an inner part (8) with tracks (13, 14) extending on its outside in the direction of sliding,
• an outer part (7) which surrounds the inner part (8) and is movable relative to the inner part (8), wherein the outer part (7) is substantially circular-cylindrical and is inserted into the associated wheel-bearing or fork tube, and
• at least two rolling members (9, 10) disposed in the outer part (7) and mounted for rotation around an associated axis (11, 12) disposed in and on the outer part (7), wherein the rolling members (9, 10) roll when the inner part (8) moves in the outer part (7) along the tracks (13, 14), and the rolling members (9, 10) have a convex shape and the tracks (13, 14) each have a concave shape in order to transmit forces acting at right angles to or transversely of the tracks.

2. A motorcycle fork according to claim 1, wherein the axes (11, 12) extend like chords over an arcuate wall segment of the outer parts (7), wherein the ends of the axes are held on the inside of the outer parts (7).

3. A motorcycle fork according to claim 1 or claim 2, wherein the outer parts (7) have wall portions varying in thickness.

4. A motorcycle fork according to any of claims 1 to 3, wherein the wall thickness of the outer parts (7) in the wall portions covered by the axes (11, 12) and the rolling members (9, 10) is less than in the other wall portions.

5. A motorcycle fork according to claim 4, wherein the reduced thickness in the wall portions covered by the axes (11, 12) and the rolling members (9, 10) is obtained by means of a recess (15, 16) formed in the outer periphery of the outer part (7).

6. A motorcycle fork according to any of claims 1 to 5, wherein the wall of the outer part (7) in the middle region of the axes (11, 12) in each case has a passage opening (21, 22) into which the associated rolling member (9, 10) projects, as seen in an end view of the outer part (7).

7. A motorcycle fork according to any of claims 1 to 6, wherein the rolling members (9, 10) are mounted for sliding along the axes (11, 12).

8. A motorcycle fork according to any of claims 1 to 6, wherein rolling members (9, 10) are mounted for rolling along the axes (11, 12).

9. A motorcycle fork according to any of claims 1 to 8, wherein precisely two rolling members (9, 10) are provided and disposed diametrically opposite one another in the outer part (7).

10. A motorcycle fork according to any of claims 1 to 9, wherein the rolling members (9, 10), on their inner periphery in the central region of the respective axis (11, 12), have a driving element (17, 18) which, when the inner part (8) moves relative to the outer part (7), ensures that the rolling members (9) roll along the tracks (13, 14).

11. A motorcycle fork according to claim 10, wherein the driving element (17, 18) is a resilient ring.

12. A motorcycle fork according to claim 10, wherein the driving element (17, 18) is in the form of teeth which mesh with corresponding or co-operating teeth on the inner part (8).

13. A motorcycle fork according to any of claims 1 to 12, wherein the two fork tubes each have a wheel-bearing tube (2) on which a front wheel is fastened, and a top fork tube movable in the wheel-bearing tube (2), wherein the outer parts (7) are pressed into the tubes (2) and the inner parts are formed by the bottom ends of the top fork tubes.

## Revendications

1. Fourche de roue de moto comportant deux tubes support de roue ou tube de fourche recevant chacun un palier coulissant, comprenant :
- une partie intérieure (8) dont le côté extérieur comporte des chemins de roulement (13, 14) s'étendant dans la direction de coulissement,
- une partie extérieure (7) entourant la partie intérieure (8) et coulissant par rapport à la partie intérieure (8), la partie extérieure (7) pratiquement cylindrique de section circulaire est logée dans le tube de support de roue ou tube de fourche,
- au moins deux organes de roulement (9, 10) dans la partie extérieure (7) montés à rotation chacun autour d'un axe de rotation (11, 12) sur la partie extérieure (7) à l'intérieur de celle-ci (7), les organes de roulement (9, 10) roulant sur les chemins de roulement (13, 14) lorsque la partie intérieure (8) coulisse dans la partie extérieure (7), et
- les organes de roulement (9, 10) ont une forme convexe et les chemins de roulement (13, 14) ont chacun une forme concave pour transmettre des efforts perpendiculaires et/ou transversaux aux chemins de roulement.

2. Fourche de roue de moto selon la revendication 1,
dont
chacun des axes de rotation (11, 12) coupent, suivant une forme de corde, un segment de paroi en arc de cercle de la partie extérieure (7), les extrémités des axes de rotation étant tenues chacune dans le côté intérieur de cette partie extérieure (7).

3. Fourche de roue de moto selon la revendication 1 ou 2,
dont
les parties extérieures (7) ont des segments de paroi d'épaisseur différente.

4. Fourche de roue de moto selon les revendications 1 à 3,
dont
au niveau des segments de paroi couverts par les axes de rotation (11, 12) et des organes de roulement (9, 10) l'épaisseur de paroi de la partie extérieure (7) est inférieure à l'épaisseur des autres segments de paroi.

5. Fourche de roue de moto selon la revendication 4,
dont
l'épaisseur de paroi plus faible dans les segments de paroi couverts par les axes de rotation (11, 12) et les organes de roulement (9, 10) sont réalisés par un dégagement (15, 16) de la périphérie extérieure de la partie extérieure (7).

6. Fourche de roue de moto selon les revendications 1 à 5,
dont
la paroi de la partie extérieure (7) comporte un orifice de passage (21, 22) dans la zone centrale de chaque axe de rotation (11, 12), et en vue de face de la partie extérieure (7), l'organe de roulement (9, 10) associé traverse cet orifice de passage.

7. Fourche de roue de moto selon les revendications 1 à 6,
dont
les organes de roulement (9, 10) sont montés par un palier lisse sur les axes de rotation (11, 12).

8. Fourche de roue de moto selon les revendications 1 à 6,
dont
les organes de roulement (9, 10) sont montés par des paliers à roulement sur les axes de rotation (11, 12).

9. Fourche de roue de moto selon les revendications 1 à 8,
comportant précisément deux organes de roulement (9, 10) en position diamétralement opposée dans la partie extérieure (7).

10. Fourche de roue de moto selon les revendications 1 à 9,
dont
les organes de roulement (9, 10) comportent dans la zone centrale de leur périphérie extérieure de l'axe de rotation (11, 12), un organe d'entraînement (17, 18) constitué par une denture engrenant avec une denture complémentaire associée dans la partie intérieure (8) vis-à-vis de la partie extérieure (7) d'un organe de roulement (9) sur les chemins de roulement (13, 14) .

11. Fourche de roue de moto selon la revendication 10,
selon laquelle
l'élément d'entraînement est une bague élastique.

12. Fourche de roue de moto selon la revendication 10,
dans laquelle
l'élément d'entraînement (17, 18) est formé par une denture qui engrène avec la denture antagoniste de la partie intérieure (8).

13. Fourche de roue de moto selon les revendications 1 à 12,
selon laquelle
les deux tubes de fourche comportent chacun un élément de tube de support de roue auquel est fixée une roue avant ainsi qu'un élément de tube de fourche, supérieur, coulissant dans les éléments de tube de support de roue (2), les parties extérieures (7) étant pressées dans les éléments de tube de support de roue (2), et les parties intérieures étant formées par les extrémités inférieures des éléments supérieurs de tube de support de roue (2).
